# EUROPEAN PATENT APPLICATION

(11) **EP 4 825 610 A1**
(43) Date of publication of application: **21.10.2026**
(21) Application number: 24903188.1
(22) Date of filing: 18.06.2024
(51) Int. Cl.: B60C 19/00, B60C 17/00

(54) **TIRE**

(30) Priority: 11.12.2023 JP 2023208732
(71) Applicant: BRIDGESTONE CORPORATION, Chuo-ku Tokyo 104-8340 (JP)
(72) Inventor: KAMADA, Takehito, Tokyo 104-8340 (JP); HOSHINO, Hironori, Tokyo 104-8340 (JP)
(74) Representative: Marks & Clerk LLP
(86) International application number: PCT/JP2024/022107
(87) International publication number: WO 2025/126524

(57) **Abstract**

A tire including: side-reinforcing rubber having a crescent-shaped cross section, which is disposed in a sidewall portion lb of the tire; and a communication device 10 embedded inside the tire. The side-reinforcing rubber has a side-reinforcing rubber joint portion 2j in which tire circumferential end portions of the side-reinforcing rubber are joined together. In a projection plane when the tire is projected in a tire width direction, at least a part of the communication device overlaps the side-reinforcing rubber joint portion.

## Description

### TECHNICAL FIELD

The present disclosure relates to a tire.

This application claims priority based on Japanese Patent Application No. 2023-208732 filed in Japan on December 11, 2023, the entire contents of which are incorporated herein by reference.

### BACKGROUND

Conventionally, there are tires in which side-reinforcing rubber is provided in a sidewall portion (Patent Literature (PTL) 1).

### CITATION LIST

### Patent Literature

PTL 1: JP 2013-71468 A

### SUMMARY

### (Technical Problem)

The inventors of the present disclosure have newly discovered, with respect to the above-described conventional tire, a configuration that can suppress damage to a communication device (for example, an RF tag or the like) embedded inside the tire due to deformation of the tire during rolling, and have thus arrived at the present disclosure.

An object of the present disclosure is to provide a tire capable of suppressing damage to a communication device due to deformation of the tire during rolling.

### (Solution to Problem)

[1] A tire comprising:
   side-reinforcing rubber having a crescent-shaped cross section, which is disposed in a sidewall portion of the tire; and
   a communication device embedded inside the tire,
   wherein the side-reinforcing rubber has a side-reinforcing rubber joint portion in which tire circumferential end portions of the side-reinforcing rubber are joined together,
   and wherein, in a projection plane when the tire is projected in a tire width direction, at least a part of the communication device overlaps the side-reinforcing rubber joint portion.

### (Advantageous Effect)

According to the present disclosure, it is possible to provide a tire capable of suppressing damage to a communication device due to deformation of the tire during rolling.

### BRIEF DESCRIPTION OF THE DRAWINGS

In the accompanying drawings:
FIG. 1 is a side view schematically illustrating a tire according to one embodiment of the present disclosure as viewed from one side in the tire width direction, and is also a projection view schematically illustrating a state when the tire is projected in the tire width direction;
FIG. 2 is an A-A sectional view schematically illustrating a half portion of the tire of FIG. 1 by a cross section along line A-A of FIG. 1;
FIG. 3 is a B-B sectional view schematically illustrating a part of the side-reinforcing rubber of FIG. 1 by a cross section along line B-B of FIG. 1;
FIG. 4 is a perspective view schematically illustrating an example of a communication device that can be used in a tire according to an optional embodiment of the present disclosure;
FIG. 5 is an exploded perspective view schematically illustrating the communication device of FIG. 4 in an exploded state; and
FIG. 6 is a side view schematically illustrating a tire according to another embodiment of the present disclosure as viewed from one side in the tire width direction, and is also a projection view schematically illustrating a state when the tire is projected in the tire width direction.

The tire according to the present disclosure can be suitably used for any type of pneumatic tire, and, for example, can be suitably used for a passenger vehicle pneumatic tire.

Hereinafter, embodiments of the tire according to the present disclosure will be illustratively described with reference to the drawings.

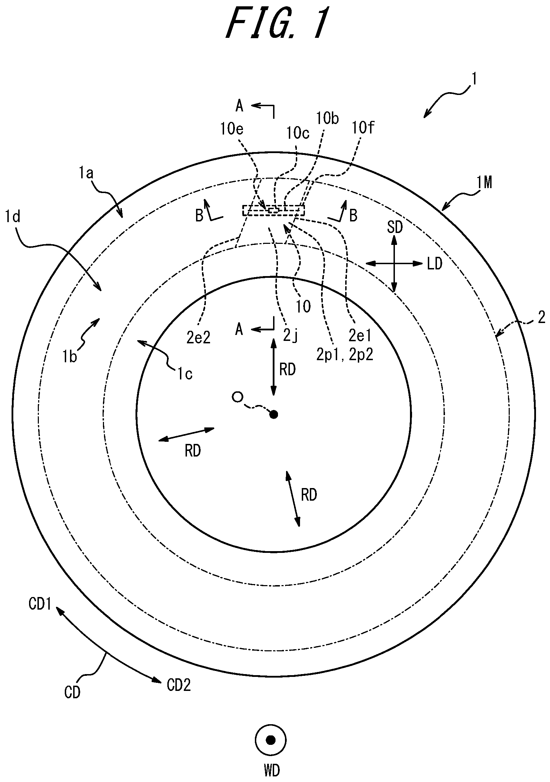

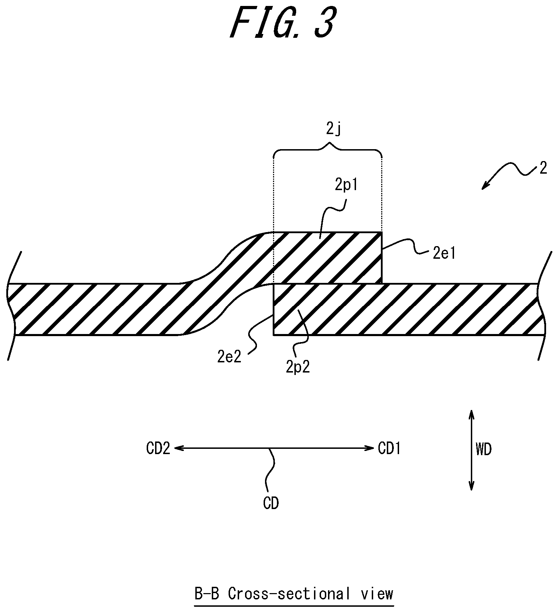

In each drawing, the same reference numerals are assigned to common members and portions. In some of the drawings, the tire width direction is indicated by the symbol "WD," the tire radial direction by the symbol "RD," and the tire circumferential direction by the symbol "CD." In this specification, one side in the tire circumferential direction (CD) is referred to as the "first side in the tire circumferential direction (CD1)" (FIG. 1, FIG. 3), and the other side in the tire circumferential direction (CD) is referred to as the "second side in the tire circumferential direction (CD2)" (FIG. 1, FIG. 3).

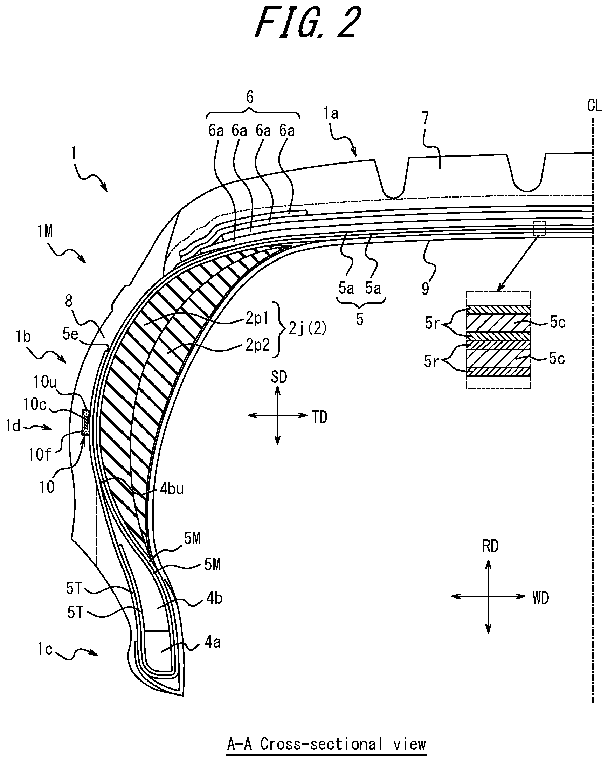

FIGS. 1 to 3 are drawings for explaining a tire 1 according to an embodiment of the present disclosure. FIG. 1 is a side view schematically illustrating the appearance of the tire 1 according to an embodiment of the present disclosure as viewed from one side in the tire width direction, and also a projection view schematically illustrating the appearance when the tire 1 is projected in the tire width direction. FIG. 2 is an A-A sectional view illustrating a half portion of the tire 1 (a portion on either side with respect to the tire equatorial plane CL) of FIG. 1, as taken along the A-A line in FIG. 1. FIG. 3 is a B-B sectional view illustrating a part of the side-reinforcing rubber 2 of FIG. 1, as taken along the B-B line in FIG. 1. The B-B line in FIG. 1 extends along the tire circumferential direction.

The tire 1 of the embodiment in FIG. 1 is configured as a passenger vehicle pneumatic tire.

However, the tire 1 of any embodiment of the present disclosure may be configured as any type of tire.

The tire 1 includes a tire main body 1M and a communication device 10. The tire main body 1M corresponds to the portion of the tire 1 other than the communication device 10.

Hereinafter, unless otherwise specified, the positional relationships, dimensions, and the like of each element are those measured in a reference state in which the tire 1 is mounted on an applicable rim, inflated to a prescribed internal pressure, and is unloaded. Further, when the tire 1 is mounted on an applicable rim, inflated to the prescribed internal pressure, and loaded with the maximum load, the width in the tire width direction of the contact patch in contact with the road surface is referred to as the ground contact width of the tire, and the end in the tire width direction of the contact patch is referred to as the ground contact end.

In this specification, the "applicable rim" refers to the approved rim for the applicable size described or to be described in the future in the industrial standards effective in the region where the pneumatic tire is produced and used, such as the JATMA YEAR BOOK of the Japan Automobile Tyre Manufacturers Association (JATMA) in Japan, the STANDARDS MANUAL of the European Tyre and Rim Technical Organisation (ETRTO) in Europe, and the YEAR BOOK of The Tire and Rim Association, Inc. (TRA) in the United States. In the case of sizes not described in these industrial standards, it refers to a rim having a width corresponding to the bead width of the pneumatic tire. The "applicable rim" includes not only current sizes but also sizes to be described in the aforementioned industrial standards in the future. As an example of "sizes to be described in the future," sizes described as "FUTURE DEVELOPMENTS" in the 2013 edition of the ETRTO may be cited.

In this specification, the "prescribed internal pressure" refers to the maximum air pressure corresponding to the maximum load capability for a single tire in the applicable size and ply rating as described in the aforementioned industrial standards such as the JATMA YEAR BOOK, and in the case of sizes not described in the aforementioned industrial standards, refers to the maximum air pressure corresponding to the maximum load capability specified for each vehicle on which the tire is mounted. Further, in this specification, the "maximum load" means the load corresponding to the maximum load capability for the applicable size of the tire described in the aforementioned industrial standards, or, in the case of sizes not described in the aforementioned industrial standards, the load corresponding to the maximum load capability specified for each vehicle on which the tire is mounted.

First, the tire main body 1M will be described.

As illustrated in FIGS. 1 and 2, the tire main body 1M includes a tread portion 1a, a pair of sidewall portions 1b extending radially inward from both ends in the tire width direction of the tread portion 1a, and a pair of bead portions 1c provided at the radially inner ends of the respective sidewall portions 1b. The tread portion 1a is the portion in the tire width direction between the pair of ground contact ends in the tire main body 1M. The bead portion 1c is configured to contact the rim at the radially inner side and the axially outer side when the tire 1 is mounted on a rim.

The tire main body 1M has a pair of tire side portions 1d extending radially inward from both ends in the tire width direction of the tread portion 1a. The tire side portion 1d is composed of the sidewall portion 1b and the bead portion 1c.

Further, the tire main body 1M includes a pair of bead cores 4a, a pair of bead fillers 4b, a carcass 5, a belt 6, tread rubber 7, side rubber 8, an inner liner 9, and a pair of side-reinforcing rubber 2.

Each bead core 4a is embedded in the corresponding bead portion 1c. The bead core 4a includes a plurality of bead wires covered with rubber. The bead wire is preferably made of metal (for example, steel). The bead wire may be formed of a monofilament or a stranded wire, for example. The bead wire may also be made of organic fiber or carbon fiber.

Each bead filler 4b is located radially outward of the corresponding bead core 4a. The bead filler 4b extends in a tapered shape toward the radially outer side. The bead filler 4b is, for example, made of rubber.

The carcass 5 extends between the pair of bead cores 4a and is toroidally extended. The carcass 5 is composed of one or more (in the embodiment of FIG. 2, two) carcass plies 5a. Each carcass ply 5a includes one or more carcass cords 5c and coating rubber 5r covering the carcass cords 5c (FIG. 2). The carcass cords 5c may be formed of monofilament or stranded wire.

The carcass cords 5c are preferably made of organic fibers such as polyester, nylon, rayon, or aramid.

The carcass ply 5a includes a ply main body 5M located between the pair of bead cores 4a. The carcass ply 5a may further include a ply turn-up portion 5T that is turned up from both ends of the ply main body 5M around the bead core 4a from the inner side to the outer side in the tire width direction. However, the carcass ply 5a may not include the ply turn-up portion 5T.

The ply main body 5M is located on the inner side in the tire width direction relative to the bead filler 4b and the bead core 4a. The ply turn-up portion 5T is located on the outer side in the tire width direction relative to the bead filler 4b and the bead core 4a.

The carcass 5 is preferably of a radial structure, but may also be of a bias structure.

The belt 6 is disposed radially outward of the crown portion of the carcass 5. The belt 6 includes one or more belt layers 6a. Each belt layer 6a includes one or more belt cords and coating rubber covering the belt cords. The belt cords may be formed of monofilament or stranded wire. The belt cords may be made of metal (for example, steel), or may be made of organic fibers such as polyester, nylon, rayon, or aramid.

The tread rubber 7 is located radially outward of the belt 6 in the tread portion 1a. The tread rubber 7 forms the tread surface, which is the radially outer surface of the tread portion 1a. A tread pattern is formed on the tread surface.

The side rubber 8 is located in the sidewall portion 1b. The side rubber 8 forms the outer surface on the outer side in the tire width direction of the sidewall portion 1b. The side rubber 8 is located on the outer side in the tire width direction relative to the carcass 5. The side rubber 8 is located on the outer side in the tire width direction relative to the bead filler 4b. The side rubber 8 is integrally formed with the tread rubber 7.

The inner liner 9 is disposed on the inner side of the carcass 5, and may, for example, be laminated on the inner side of the carcass 5. The inner liner 9 is, for example, made of butyl-based rubber having low air permeability. The butyl-based rubber includes, for example, butyl rubber and halogenated butyl rubber, which is a derivative thereof. The inner liner 9 is not limited to butyl-based rubber and may be made of other rubber compositions, resins, or elastomers.

The sidewall portion 1b is provided with side-reinforcing rubber 2. Each side-reinforcing rubber 2 is embedded in the corresponding sidewall portion 1b. Each side-reinforcing rubber 2 is disposed on the inner side in the tire width direction of the carcass 5. Further, each side-reinforcing rubber 2 is disposed on the outer side in the tire width direction of the inner liner 9. The side-reinforcing rubber 2, in a cross section in the tire width direction, has a crescent-shaped cross section that is convexly curved toward the outer side in the tire width direction, with the thickness gradually decreasing toward both the radially inner and outer sides. In this way, the tire 1 is configured as a run flat tire.

The side-reinforcing rubber 2 reinforces the tire side portion 1d and, in a state where the internal pressure of the tire 1 is low due to a puncture or the like, contributes to supporting the vehicle weight and suppresses vertical deflection of the tire 1, thereby enabling running over a certain distance.

Next, the communication device 10 will be described.

The communication device 10 only needs to be configured to be capable of wireless communication with a predetermined external device (for example, a reader or a reader/writer) outside the tire 1, and the configuration of the communication device 10 is not particularly limited.

The communication device 10 preferably has an RF tag. The RF tag is also called an "RFID tag." The RF tag is preferably configured as a passive type, but may also be configured as an active type.

The communication device 10 may have, instead of or in addition to the RF tag, an accelerometer for detecting the acceleration of the tire 1, an internal pressure sensor for detecting the internal pressure of the tire 1, or the like.

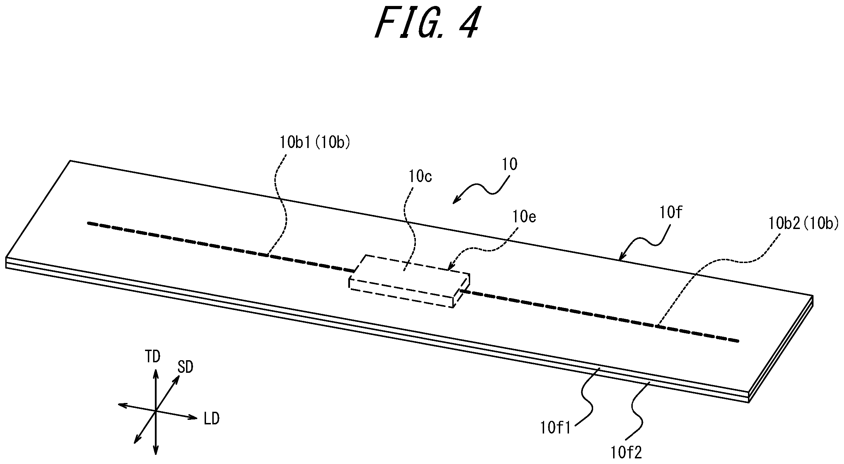

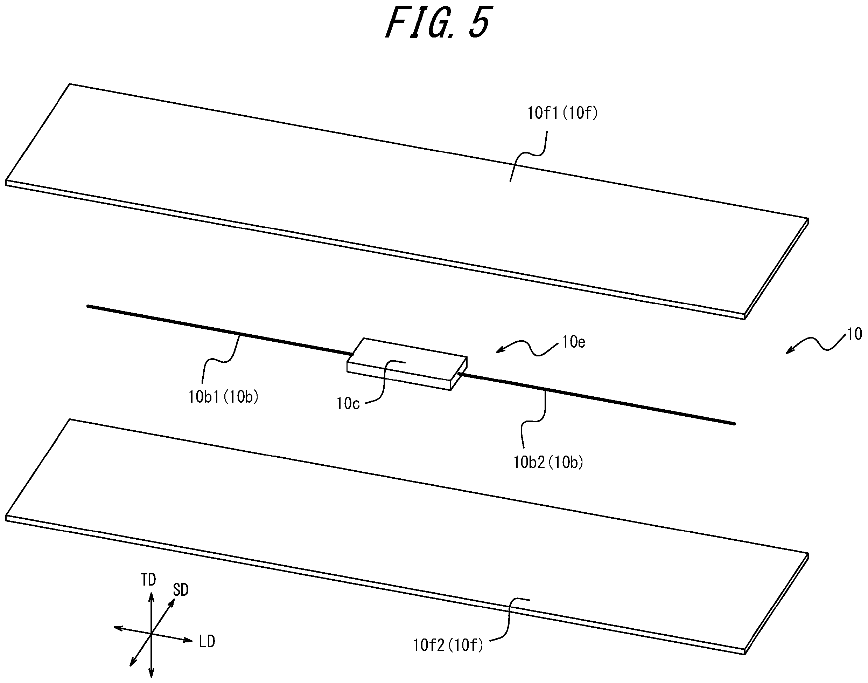

FIGS. 4 and 5 illustrate an example of the communication device 10. In this example, the communication device 10 has an RF tag. In this example, the communication device 10 includes an RF tag 10e and a covering portion 10f. The RF tag 10e includes an IC chip 10c and an antenna portion 10b. The RF tag 10e is configured as a passive type.

The IC chip 10c operates, for example, by the electromotive force induced by radio waves received by the antenna portion 10b. The IC chip 10c has, for example, a controller and a memory.

The memory may store arbitrary information. For example, the memory may store identification information of the tire 1. The identification information of the tire 1 is unique identification information for each tire 1, such as the manufacturer, manufacturing plant, manufacturing date, etc., that can identify each tire individually. The memory may also store tire history information such as running distance, number of sudden brakings, number of sudden starts, number of sudden cornerings, etc. Further, for example, sensors for detecting the internal temperature of the tire, the internal pressure of the tire, the acceleration of the tire, etc., may be provided in the tire cavity, and the memory may store detection information detected by these sensors. In this case, the RF tag 10e can acquire the detection information from the sensors by wireless communication with the sensors via the antenna portion 10b.

The controller is configured to be able to read out information from the memory.

The antenna portion 10b has a pair of antennas 10b1 and 10b2. The pair of antennas 10b1 and 10b2 are respectively connected to end portions located on opposite sides of the IC chip 10c. The antenna portion 10b is configured to be capable of transmitting and receiving with the predetermined external device outside the tire 1. In the example of FIGS. 4 and 5, each antenna 10b1 and 10b2 extends linearly, but each antenna 10b1 and 10b2 may extend in any shape, such as a wave shape.

The covering portion 10f covers the entirety of the RF tag 10e. The covering portion 10f is formed of, for example, rubber or resin.

In this example, the covering portion 10f has a pair of sheet-like covering members 10f1 and 10f2. The pair of covering members 10f1 and 10f2 are stacked with the RF tag 10e sandwiched therebetween. The pair of covering members 10f1 and 10f2 are preferably fixed to each other by adhesion or the like.

However, the covering portion 10f may be formed of a single member.

In this example, the covering portion 10f has a rectangular shape in a planar view, but the covering portion 10f may have any shape in a planar view.

Note that the communication device 10 may not have the covering portion 10f, that is, may be composed only of the RF tag 10e.

The communication device 10 configured as described above is configured to be able to receive, by the antenna portion 10b, information transmitted from the predetermined external device via radio waves or a magnetic field. By rectification (in the case of radio waves) or resonance (in the case of a magnetic field), power is generated in the antenna portion 10b of the communication device 10, and the memory and controller of the IC chip 10c perform predetermined operations. For example, the controller reads out information in the memory and replies (transmits) it from the antenna portion 10b to the predetermined external device via radio waves or a magnetic field. The predetermined external device receives radio waves or a magnetic field from the communication device 10. The predetermined external device can obtain information stored in the memory of the IC chip 10c of the communication device 10 by extracting the received information.

However, the communication device 10 may have any configuration different from this example.

The communication device 10 may have a longitudinal direction LD, a short direction SD, and a thickness direction TD. The longitudinal direction LD, the short direction SD, and the thickness direction TD are mutually perpendicular.

As illustrated in FIGS. 4 and 5, when the communication device 10 has the RF tag 10e, the longitudinal direction LD of the communication device 10 is parallel to the extending direction of the antenna portion 10b. When each antenna 10b1 and 10b2 of the antenna portion 10b is wave-shaped, the extending direction of the antenna portion 10b refers to the extending direction of the amplitude centerline of the wave shape formed by each antenna 10b1 and 10b2. In the communication device 10, the thickness direction TD of the communication device 10 refers to the thickness direction of the covering portion 10f when the communication device 10 has the covering portion 10f, and refers to the thickness direction of the IC chip 10c when the communication device 10 does not have the covering portion 10f.

The length of the RF tag 10e in the longitudinal direction LD is preferably, for example, 20 mm or more, or 50 mm or more. The length of the RF tag 10e in the longitudinal direction LD is preferably, for example, 100 mm or less, or 70 mm or less.

The length of the RF tag 10e in the short direction SD is preferably, for example, 10 mm or less, or 8 mm or less.

The length of the RF tag 10e in the thickness direction TD is preferably, for example, 5 mm or less, or 2 mm or less.

When the communication device 10 has the covering portion 10f, the length of the communication device 10 in the longitudinal direction LD is preferably, for example, 30 mm or more, or 60 mm or more. The length of the RF tag 10e in the longitudinal direction LD is preferably, for example, 110 mm or less, or 80 mm or less.

When the communication device 10 has the covering portion 10f, the length of the communication device 10 in the short direction SD is preferably, for example, 20 mm or less, or 15 mm or less.

When the communication device 10 has the covering portion 10f, the length of the communication device 10 in the thickness direction TD is preferably, for example, 6 mm or less, or 3 mm or less.

The thickness of each of the covering members 10f1 and 10f2 of the covering portion 10f is preferably, for example, 0.5 mm or more. The thickness of each of the covering members 10f1 and 10f2 of the covering portion 10f is preferably, for example, 1 mm or less.

The communication device 10 is embedded inside the tire 1 (tire main body 1M).

During manufacture of the tire 1, the raw tire constituting the tire main body 1M and the communication device 10 are accommodated inside a mold for forming a tire and vulcanized and molded.

Hereinafter, preferred configurations of various tire structural members (such as the side-reinforcing rubber 2) constituting the tire main body 1M, and preferred positional relationships between various tire structural members constituting the tire main body 1M and the communication device 10, will be described.

Note that the communication device 10 may be provided only in one of the pair of tire half portions on both sides of the tire equatorial plane CL in the tire 1. In that case, the configurations and positions described below are preferably satisfied in at least the tire half portion in which the communication device 10 is provided among the pair of tire half portions of the tire 1, but may also be satisfied in each of the pair of tire half portions of the tire 1.

Further, the communication device 10 may be provided in each of the pair of tire half portions of the tire 1. In that case, the configurations and positions described below are preferably satisfied in each of the tire half portions, but may also be satisfied only in one of the pair of tire half portions of the tire 1.

As illustrated in FIGS. 1 and 3, the side-reinforcing rubber 2 has a side-reinforcing rubber joint portion 2j in which a pair of tire circumferential end portions 2p1 and 2p2 of the side-reinforcing rubber 2 are joined together.

As schematically depicted in FIG. 3, one of the pair of tire circumferential end portions 2p1 and 2p2 of the side-reinforcing rubber 2 is a first tire circumferential end portion 2p1, which is the end portion on the first side CD1 in the tire circumferential direction of the side-reinforcing rubber 2. The first tire circumferential end portion 2p1 includes a first tire circumferential edge 2e1, which is the tire circumferential edge located furthest on the first side CD1 in the tire circumferential direction among the first tire circumferential end portion 2p1 and faces the first side CD1 in the tire circumferential direction. The other of the pair of tire circumferential end portions 2p1 and 2p2 of the side-reinforcing rubber 2 is a second tire circumferential end portion 2p2, which is the end portion on the second side CD2 in the tire circumferential direction of the side-reinforcing rubber 2. The second tire circumferential end portion 2p2 includes a second tire circumferential edge 2e2, which is the tire circumferential edge located furthest on the second side CD2 in the tire circumferential direction among the second tire circumferential end portion 2p2 and faces the second side CD2 in the tire circumferential direction.

As exemplified in FIG. 3, in the side-reinforcing rubber joint portion 2j, the pair of tire circumferential end portions 2p1 and 2p2 of the side-reinforcing rubber 2 may overlap each other in the tire width direction. In this case, the joining strength between the pair of tire circumferential end portions 2p1 and 2p2 of the side-reinforcing rubber 2 can be improved, and consequently, the formation of a gap between the tire circumferential end portions 2p1 and 2p2 can be effectively suppressed. In this case, the first tire circumferential end portion 2p1 may be located on the outer side in the tire width direction relative to the second tire circumferential end portion 2p2, or alternatively, the first tire circumferential end portion 2p1 may be located on the inner side in the tire width direction relative to the second tire circumferential end portion 2p2.

Alternatively, although not illustrated, in the side-reinforcing rubber joint portion 2j, the pair of tire circumferential end portions 2p1 and 2p2 of the side-reinforcing rubber 2 may be butted against (and thus in contact with) each other at their respective tire circumferential edges 2e1 and 2e2. In this case, as in the example of FIG. 3, when viewing a cross section along the tire width direction and the tire circumferential direction (FIG. 3), the pair of tire circumferential edges 2e1 and 2e2 of the side-reinforcing rubber 2 may be substantially parallel to the tire width direction, or may extend in a direction inclined with respect to the tire width direction.

In each of the above examples, the pair of tire circumferential end portions 2p1 and 2p2 of the side-reinforcing rubber 2 may, as in the example of FIG. 3, each have a substantially uniform (constant) thickness in the tire width direction along the tire circumferential direction, or may have a non-uniform thickness in the tire width direction along the tire circumferential direction. For example, the thickness in the tire width direction may gradually decrease toward each of the tire circumferential edges 2e1 and 2e2 along the tire circumferential direction.

In each of the above examples, the pair of tire circumferential edges 2e1 and 2e2 of the side-reinforcing rubber 2 may, as in the example of FIG. 3, form a three-dimensional surface, and thus, when viewing a cross section along the tire width direction and the tire circumferential direction (FIG. 3), may form a linear shape. Alternatively, the pair of tire circumferential edges 2e1 and 2e2 of the side-reinforcing rubber 2 may form a three-dimensional line, and thus, when viewing a cross section along the tire width direction and the tire circumferential direction (FIG. 3), may form a point shape.

In each of the above examples, in the projection plane (FIG. 1) when the tire 1 is projected in the tire width direction, the pair of tire circumferential edges 2e1 and 2e2 of the side-reinforcing rubber 2 may each, as in the example of FIG. 1, extend in a direction inclined with respect to the tire radial direction, or may extend parallel to the tire radial direction.

In each of the above examples, as in the example of FIG. 3, the thickness in the tire width direction at the side-reinforcing rubber joint portion 2j of the side-reinforcing rubber 2 may be greater than the thickness in the tire width direction at portions other than the side-reinforcing rubber joint portion 2j.

As exemplified in FIG. 1, in the tire 1, in the projection plane (FIG. 1) when the tire 1 is projected in the tire width direction, at least a part (in the example of FIG. 1, only a part) of the communication device 10 overlaps the side-reinforcing rubber joint portion 2j.

As described above, in the present embodiment, in the projection plane (FIG. 1) when the tire 1 is projected in the tire width direction, at least a part (in the example of FIG. 1, only a part) of the communication device 10 overlaps the side-reinforcing rubber joint portion 2j.

The rubber constituting the side-reinforcing rubber 2 is generally relatively hard and relatively thick among all tire constituent members (particularly, tire constituent members made of rubber) constituting the tire main body 1M. Furthermore, the side-reinforcing rubber 2, especially at the side-reinforcing rubber joint portion 2j, tends to be even thicker.

According to the present embodiment, in the above projection plane, at least a part of the communication device 10 is arranged so as to overlap the side-reinforcing rubber joint portion 2j, which is a particularly hard and thick portion (and thus, a particularly less deformable portion) in the tire 1 (specifically, the tire main body 1M). As a result, during rolling, the side-reinforcing rubber joint portion 2j, while being located in the vicinity of the communication device 10, suppresses its own deformation and, consequently, supports the communication device 10 so as to suppress deformation in the vicinity of the communication device 10, thereby effectively suppressing damage to the communication device 10 due to deformation of the tire 1 (specifically, the tire main body 1M) during rolling. Thus, the durability of the communication device 10 and, consequently, the tire 1 can be improved.

For example, when the communication device 10 has an IC chip 10c and an antenna portion 10b as described above (FIGS. 4 to 5), generally, during deformation of the tire 1, the antenna portion 10b may be displaced and/or deformed relative to the IC chip 10c, so that the connecting portion between the IC chip 10c and the antenna portion 10b or the vicinity thereof tends to be particularly susceptible to damage.

In addition, as described above, the side-reinforcing rubber joint portion 2j is originally a particularly hard and thick portion in the tire 1 (specifically, the tire main body 1M), and in the present embodiment, the influence on the uniformity of the tire 1 due to the addition of the communication device 10 in the vicinity thereof is small.

Therefore, according to the present embodiment, it is possible to suppress damage to the communication device 10 due to deformation of the tire 1 (specifically, the tire main body 1M) during rolling, without substantially impairing uniformity, and to improve the durability of the communication device 10 and, consequently, the tire 1.

As exemplified in FIG. 1, the communication device 10 may be oriented such that the longitudinal direction LD of the communication device 10 substantially follows the tire circumferential direction. In this case, the followability to deformation of the tire during rolling can be improved, and consequently, the durability of the communication device 10 can be improved.

In this case, as exemplified in FIG. 1, in the projection plane (FIG. 1) when the tire 1 is projected in the tire width direction, it is preferable that at least the IC chip 10c of the communication device 10 overlaps the side-reinforcing rubber joint portion 2j. As a result, the durability of the IC chip 10c in particular among the communication device 10 can be further improved against deformation of the tire 1 during rolling.

From a similar viewpoint, as exemplified in FIG. 1, in the projection plane (FIG. 1) when the tire 1 is projected in the tire width direction, it is preferable that at least the connecting portion between the IC chip 10c and the antenna portion 10b of the communication device 10 overlaps the side-reinforcing rubber joint portion 2j.

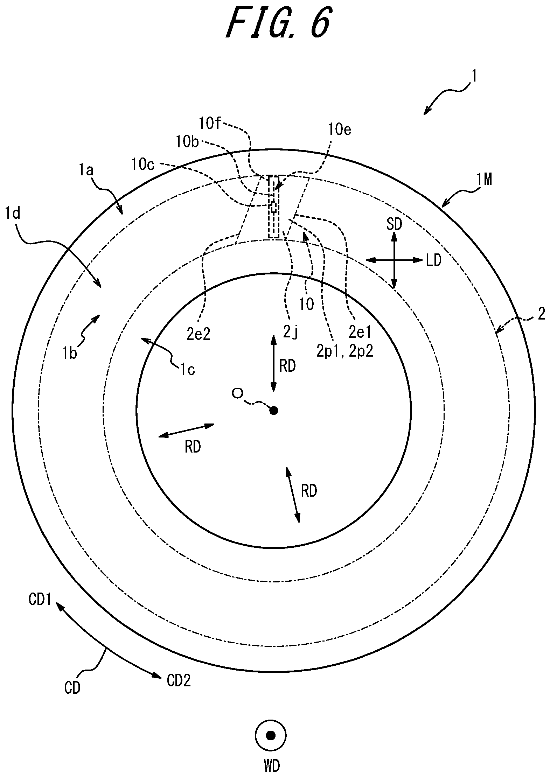

Alternatively, as exemplified in FIG. 6, the communication device 10 may be oriented such that the longitudinal direction LD of the communication device 10 substantially follows the tire radial direction. In this case, in the projection plane (FIG. 6) when the tire 1 is projected in the tire width direction, most or all of the communication device 10 may overlap the side-reinforcing rubber joint portion 2j.

As a result, the durability of most or all of the communication device 10 can be further improved against deformation of the tire 1 during rolling.

In each example described in the present specification, as in the example of FIG. 6, it is preferable that the entirety of the communication device 10 overlaps the side-reinforcing rubber joint portion 2j in the projection plane (FIGS. 1 and 6) when the tire 1 is projected in the tire width direction.

As a result, the durability of the entire communication device 10 can be further improved against deformation of the tire 1 during rolling.

As in the example of FIG. 2, it is preferable that the communication device 10 is disposed on the outer side in the tire width direction relative to the side-reinforcing rubber 2.

It is preferable that the communication device 10 is disposed on the outer side in the tire width direction relative to the carcass 5, as in the example of FIG. 2.

It is preferable that the communication device 10 is located between the side rubber 8 and the carcass 5, as in the example of FIG. 2. Since the side rubber 8 is located outermost in the tire, it has high heat dissipation performance. Therefore, by locating the communication device 10 between the side rubber 8 and the carcass 5, the amount of heat applied to the communication device 10 can be further reduced by the heat dissipation function of the side rubber 8, and consequently, damage to the communication device 10 due to heat can be further suppressed.

In this case, as depicted in FIG. 2, it is preferable that the communication device 10 is in contact with the side rubber 8.

As depicted in FIG. 2, it is preferable that the communication device 10 is embedded inside the tire side portion 1d of the tire 1.

Generally, metal may attenuate radio waves between the communication device 10 and the above-mentioned predetermined external device (for example, a reader or a reader/writer), thereby possibly reducing the communication performance between the communication device 10 and the predetermined external device, and consequently, possibly shortening the communication distance between the communication device 10 and the predetermined external device. On the other hand, in the tire main body 1M, metal (for example, steel) may be used in the belt 6, bead core 4a, and the like. Generally, the tire side portion 1d tends to contain less metal than the tread portion 1a. Therefore, by disposing the communication device 10 in the tire side portion 1d, communication performance can be improved and the communication distance between the communication device 10 and the predetermined external device can be increased, as compared to the case where the communication device 10 is disposed in the tread portion 1a.

It is preferable that the communication device 10 is embedded in a portion of the tire side portion 1d of the tire main body 1M that is on the outer side in the tire width direction relative to the carcass 5.

Furthermore, it is preferable that the communication device 10 is oriented such that the thickness direction TD of the communication device 10 substantially follows the tire width direction (FIG. 2).

As in the example of FIG. 2, it is preferable that the communication device 10 is disposed in the sidewall portion 1b. Generally, the sidewall portion 1b tends to contain less metal than the bead portion 1c. Therefore, by disposing the communication device 10 in the sidewall portion 1b, communication performance can be improved and the communication distance between the communication device 10 and the predetermined external device can be increased, as compared to the case where the communication device 10 is disposed in the bead portion 1c.

It is preferable that the communication device 10 is located in the vicinity of the tire maximum width position of the tire 1 (specifically, the tire main body 1M) in the tire radial direction.

As depicted in FIG. 2, it is preferable that the tire radial outer end 10u (more preferably, the entirety) of the communication device 10 is located on the outer side in the tire radial direction relative to the tire radial outer end of the bead core 4a, and more preferably, on the outer side in the tire radial direction relative to the tire radial center of the bead filler 4b. For example, it is preferable that the communication device 10 is located on the outer side in the tire radial direction relative to the tire radial outer end 4bu of the bead filler 4b.

This configuration is particularly preferable when the tire 1 is configured as a passenger vehicle pneumatic tire.

When the communication device 10 is disposed in the sidewall portion 1b as described above, it is preferable, as in the example of FIG. 2, that the tire radial outer end 10u of the communication device 10 is located on the inner side in the tire radial direction relative to the tire radial outer end 5e of the ply turn-up portion 5T of the carcass 5. As a result, communication performance can be improved and the communication distance between the communication device 10 and the predetermined external device can be increased, and the communication device 10 can be disposed in a portion of the tire main body 1M that is relatively less strained during rolling of the tire 1, thereby improving the durability of the communication device 10 and, consequently, the tire 1.

The tire radial distance between the tire radial outer end 10u of the communication device 10 and the tire radial outer end 5e of the ply turn-up portion 5T of the carcass 5 is preferably 3 to 30 mm, and more preferably 5 to 15 mm.

This configuration is particularly preferable when the tire 1 is configured as a passenger vehicle pneumatic tire.

As in the example of FIG. 2, it is preferable that the tire radial outer end 5e of the ply turn-up portion 5T of the carcass 5 is located on the outer side in the tire radial direction relative to the tire radial outer end 4bu of the bead filler 4b. However, the tire radial outer end 5e of the ply turn-up portion 5T of the carcass 5 may be located at the same tire radial position as the tire radial outer end of the bead filler 4b, or may be located on the inner side in the tire radial direction relative thereto.

The tire radial outer end 5e of the ply turn-up portion 5T of the carcass 5 may be located on the outer side in the tire radial direction relative to the tire maximum width position of the tire 1 (specifically, the tire main body 1M), may be located at the same tire radial position as the tire maximum width position, or may be located on the inner side in the tire radial direction relative to the tire maximum width position. Here, the "tire maximum width position" refers to the tire radial position at which the dimension in the tire width direction of the tire 1 (specifically, the tire main body 1M) is maximum.

As in the example of FIG. 2, it is preferable that the communication device 10 is in contact with the outer surface in the tire width direction of the carcass 5, and more preferably, in contact with the outer surface in the tire width direction of the ply turn-up portion 5T of the carcass 5.

This configuration is particularly preferable when the tire 1 is configured as a passenger vehicle pneumatic tire.

### INDUSTRIAL APPLICABILITY

The tire according to the present disclosure can be suitably used for any type of pneumatic tire, and for example, can be suitably used for a passenger vehicle pneumatic tire.

### REFERENCE SIGNS LIST

1: tire
1M: tire main body, 1a: tread portion, 1b: sidewall portion, 1c: bead portion, 1d: tire side portion,
2: side-reinforcing rubber, 2p1: first tire circumferential end portion (tire circumferential end portion), 2p2: second tire circumferential end portion (tire circumferential end portion), 2e1: first tire circumferential edge (tire circumferential edge), 2e2: second tire circumferential edge (tire circumferential edge), 2j: side-reinforcing rubber joint portion,
4a: bead core,
4b: bead filler, 4bu: tire radial outer end of bead filler,
5: carcass, 5a: carcass ply, 5c: carcass cord (cord), 5r: coating rubber, 5M: ply main body, 5T: ply turn-up portion, 5e: tire radial outer end of ply turn-up portion of carcass,
6: belt, 6a: belt layer,
7: tread rubber,
8: side rubber,
9: inner liner,
10: communication device,
10e: RF tag,
10b: antenna portion, 10b1, 10b2: antenna,
10f: covering portion, 10f1, 10f2: covering member,
10c: IC chip,
10u: tire radial outer end of communication device,
CL: tire equator,
WD: tire width direction, RD: tire radial direction, CD: tire circumferential direction, CD1: first side in tire circumferential direction, CD2: second side in tire circumferential direction,
LD: longitudinal direction of communication device, SD: short direction of communication device, TD: thickness direction of communication device,
O: central axis of tire (rotational axis)

## Claims

1. A tire comprising: side-reinforcing rubber having a crescent-shaped cross section, which is disposed in a sidewall portion of the tire; and
a communication device embedded inside the tire,
wherein the side-reinforcing rubber has a side-reinforcing rubber joint portion in which tire circumferential end portions of the side-reinforcing rubber are joined together,
and wherein, in a projection plane when the tire is projected in a tire width direction, at least a part of the communication device overlaps the side-reinforcing rubber joint portion.

2. The tire according to claim 1, wherein the communication device is oriented such that a longitudinal direction of the communication device substantially follows a tire circumferential direction, wherein the communication device has an IC chip,
and wherein, in the projection plane, at least the IC chip of the communication device overlaps the side-reinforcing rubber joint portion.

3. The tire according to claim 1, wherein the communication device is oriented such that a longitudinal direction of the communication device substantially follows a tire radial direction.

4. The tire according to claim 1, wherein, in the projection plane, the entirety of the communication device overlaps the side-reinforcing rubber joint portion.

5. The tire according to any one of claims 1 to 4, wherein the communication device has an RF tag.
